(19) Europäisches Patentamt / European Patent Office / Office européen des brevets

(11) **EP 4 435 724 A2**

(12) **EUROPEAN PATENT APPLICATION**
published in accordance with Art. 153(4) EPC

(43) Date of publication:
**25.09.2024 Bulletin 2024/39**

(21) Application number: **22912123.1**

(22) Date of filing: **22.12.2022**

(51) International Patent Classification (IPC):
**G06T 11/00** $^{(2006.01)}$    **G06F 17/17** $^{(2006.01)}$
**G06T 5/50** $^{(2006.01)}$    **G06N 3/08** $^{(2023.01)}$
**G06N 3/0475** $^{(2023.01)}$

(86) International application number:
**PCT/SG2022/050927**

(87) International publication number:
**WO 2023/121571 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.12.2021 CN 202111609441**

(71) Applicant: **Lemon Inc.**
**Grand Cayman, KY1-1205 (KY)**

(72) Inventors:
• **SHI, Yichun**
**Los Angeles, California 90066 (US)**
• **YANG, Xiao**
**Los Angeles, California 90066 (US)**
• **SHEN, Xiaohui**
**Los Angeles, California 90066 (US)**

(74) Representative: **Dentons UK and Middle East LLP**
**One Fleet Place**
**London EC4M 7WS (GB)**

(54) **VIDEO GENERATION METHOD AND DEVICE**

(57) Provided in the embodiments of the present disclosure are a video generation method and device. The method comprises: extracting a first image feature from a first image; according to the first image feature and a second image feature, obtaining a plurality of intermediate image features by means of nonlinear interpolation, wherein the second image feature is an image feature of a second image; and performing image reconstruction by means of an image generation model and on the basis of the first image feature, the second image feature and the plurality of intermediate image features, so as to generate a target video, wherein the target video is used for presenting a process of a gradual change from the first image to the second image. Therefore, the quality of intermediate image features is improved by means of nonlinear interpolation, and thus the image quality of intermediate frames of a target video is improved, that is, the video quality of the target video is improved.

extracting a first image feature from a first image    S201

obtaining a plurality of intermediate image features by means of nonlinear interpolation according to the first image feature and a second image feature, in which the second image feature is an image feature of a second image    S202

performing image reconstruction by means of an image generation model based on the first image feature, the second image feature, and the plurality of intermediate image features, so as to generate a target video, in which the target video is used for presenting a process of a gradual change from the first image to the second image    S203

FIG. 2

EP 4 435 724 A2

**Description**

CROSS-REFERENCE TO RELATED APPLICATION

This application claims the priority of Chinese Patent Application filed on December 24, 2021 with the Chinese Patent Office, with application number 202111609441.8, entitled as "Video Generation Method and Device", and the entire content of which is incorporated by reference in this article.

TECHNICAL FIELD

Embodiments of the present disclosure relate to the field of computer technologies, in particular to a video generation method and device.

BACKGROUND

In current computer visual technology and deep learning technology, a video that gradually changes between two images may be generated based on the two images. For example, two facial images are input into a deep learning model, a video that gradually changes between the two facial images is generated, and video frames in this video gradually change from one facial image to the other facial image. The technique may be used, for example, to generate special effects to improve the interest of videos.
In the process of generating a video, multiple video frames in the video need to be generated based on two images, so as to obtain the video that gradually changes between the two images. However, at present, the quality of generating multiple video frames based on two images, especially the image quality of intermediate frames of a video, is yet to be improved.

SUMMARY

Embodiments of the present disclosure provide a video generation method and device to solve the problem of improving image quality of intermediate frames in a video generated based on a small number of images.
In a first aspect, an embodiment of the present disclosure provides a video generation method, including:

extracting a first image feature from a first image;
obtaining a plurality of intermediate image features by means of nonlinear interpolation according to the first image feature and a second image feature, in which the second image feature is an image feature of a second image; and
performing image reconstruction by means of an image generation model based on the first image feature, the second image feature, and the plurality of intermediate image features, so as to generate a target video, in which the target video is used for presenting a process of a gradual change from the first image to the second image.

In a second aspect, an embodiment of the present disclosure provides a model determination method, including:

training a neural network according to a plurality of training images and an image generation model, in which the neural network is used for learning a deviation of image feature adjustment performed based on a feature space of the image generation model,
in which a training process of the neural network includes:

generating a target image feature according to an image feature of a first training image and an image feature of a second training image;
performing initial adjustment on the target image feature based on the feature space;
learning a target deviation corresponding to the initial adjustment via the neural network, and readjusting a target image feature that is initially adjusted according to the target deviation; and
adjusting model parameters of the neural network according to the target deviation, a target image feature that is readjusted, the first training image and the second training image.

In a third aspect, an embodiment of the present disclosure provides a video generation device, including:

an extraction unit, configured to extract a first image feature from a first image;
an interpolation unit, configured to obtain a plurality of intermediate image features by means of nonlinear interpolation according to the first image feature and a second image feature, the second image feature being an image feature of a second image; and
a video generation unit, configured to perform image reconstruction by means of an image generation model based on the first image feature, the second image feature, and the plurality of intermediate image features, so as to generate a target video, in which the target video is used for presenting a process of a gradual change from the first image to the second image.

In a fourth aspect, an embodiment of the present disclosure provides a model determination device, including:

a training unit, configured to train a neural network according to a plurality of training images and an image generation model, in which the neural network is used for learning a deviation of image feature adjustment performed based on a feature space of the image generation model,
in which a training process of the neural network includes:

generating a target image feature according to an image feature of a first training image and an image feature of a second training image;
performing initial adjustment on the target image feature based on the feature space;
learning a target deviation corresponding to the initial adjustment via the neural network, and readjusting a target image feature that is initially adjusted according to the target deviation; and
adjusting model parameters of the neural network according to the target deviation, a target image feature that is readjusted, the first training image and the second training image.

In a fifth aspect, an embodiment of the present disclosure provides an electronic device, including: at least one processor and a memory,

in which the memory stores a computer-executable instruction, and
the at least one processor executes the computer-executable instruction stored in the memory such that the at least one processor performs the video generation method as described in the first aspect and various possible designs of the first aspect, or perform the model determination method as described in the second aspect and various possible designs of the second aspect.

In a sixth aspect, an embodiment of the present disclosure provides a computer readable storage medium, in which the computer readable storage medium stores computer executable instructions, and when the computer executable instructions are executed by a processor, the video generation method as described in the first aspect and various possible designs of the first aspect, or the model determination method as described in the second aspect and various possible designs of the second aspect is implemented.
In a seventh aspect, according to one or more embodiments of the present disclosure, a computer program product is provided, the computer program product includes computer executable instructions, and when the computer executable instructions are executed by a processor, the video generation method as described in the first aspect and various possible designs of the first aspect, or the model determination method as described in the second aspect and various possible designs of the second aspect is implemented.
In an eighth aspect, according to one or more embodiments of the present disclosure, a computer program is provided, when the computer program is executed by a processor, the video generation method as described in the first aspect and various possible designs of the first aspect, or the model determination method as described in the second aspect and various possible designs of the second aspect is implemented.
According to the video generation method and device provided by the present embodiments, a plurality of intermediate image features are obtained by means of nonlinear interpolation according to a first image feature of a first image and a second image feature of a second image; and image reconstruction is performed by means of an image generation model based on the first image feature, the second image feature, and the plurality of intermediate image features, so as to generate a target video, in which the target video is used for presenting a process of a gradual change from the first image to the second image. Therefore, the quality of the intermediate image features is improved by means of nonlinear interpolation, the image quality of the intermediate frames of the target video is improved based on ensuring the similarity between the intermediate frames of the target video and the first image as well as the second image, and accordingly the video quality of the target video is improved.

BRIEF DESCRIPTION OF THE DRAWINGS

To describe the technical solutions in the embodiments of the present disclosure or in the prior art more clearly, the accompanying drawings required in the description of the embodiments or the prior art will be described briefly below.

Apparently, the drawings in the following description are of some embodiments of the present disclosure, other accompanying drawings can also be derived from these drawings by those ordinarily skilled in the art without creative efforts.

FIG. 1 is a schematic diagram of an application scenario to which embodiments of the present disclosure are applicable;

FIG. 2 is a schematic flowchart I of a video generation method according to an embodiment of the present disclosure;

FIG. 3a is a schematic flowchart II of a video generation method according to an embodiment of the present disclosure;

FIG. 3b is a schematic flowchart of sequentially adjusting a third image feature based on a feature space of an image generation model and a neural network according to an embodiment of the present disclosure;

FIG. 4 is an example framework diagram of nonlinear interpolation based on a feature space and a neural network according to an embodiment of the present disclosure;

FIG. 5 is a schematic flowchart of a model determination method according to an embodiment of the present disclosure;

FIG. 6 is a schematic diagram of a training framework of a neural network according to an embodiment of the present disclosure;

FIG. 7 is a block diagram of a structure of a video generation device according to an embodiment of the present disclosure;

FIG. 8 is a block diagram of a structure of a model determination device according to an embodiment of the present disclosure; and

FIG. 9 is a schematic diagram of a hardware structure of an electronic device according to an embodiment of the present disclosure.

## DETAILED DESCRIPTION

In order to make objects, technical details and advantages of the embodiments of the present disclosure apparent, the technical solutions of the embodiments will be described in a clearly and fully understandable way in connection with the drawings related to the embodiments of the present disclosure. Apparently, the described embodiments are just a part but not all of the embodiments of the present disclosure. Based on the embodiments of the present disclosure, those skilled in the art can obtain other embodiment(s), without any inventive work, which should be within the scope of the disclosure.

In the process of generating a video that gradually changes between two input images, generally, image features of the two input images are subjected to linear interpolation to obtain intermediate image features, and the intermediate image features are utilized to generate intermediate frames of the video. Although this method can ensure the continuity and similarity of video frames, the intermediate image features obtained after linear interpolation often do not conform to the distribution law (or change law) of the image features of a picture in a real video, which will lead to poor image quality of the intermediate frames and deficiency in aesthetic and reality.

To solve the above problems, embodiments of the present disclosure provide a video generation method and device. A plurality of intermediate image features are obtained by means of nonlinear interpolation based on a first image feature of a first image and a second image feature of a second image; and image reconstruction is performed by means of an image generation model based on the first image feature, the second image feature, and the plurality of intermediate image features, so as to generate a target video. The target video is used for presenting a process of a gradual change from the first image to the second image. The change process of a real video picture is a nonlinear change process, therefore, compared to a linear interpolation method, nonlinear interpolation is adopted in the embodiments of the present disclosure, thus improving the quality of the intermediate image features, improving the quality of intermediate frames of the target video, and making video pictures of the target video show a nonlinear change, which is realer and more aesthetic. Improving the quality of the intermediate image features includes: improving the reality of the intermediate image features, and improving the similarity between the intermediate images and the first image as well as the second image. Improving the quality of intermediate frames of the target video includes: improving the aesthetic and reality of the intermediate frames, and improving the similarity between the intermediate frames and the first image as well as the second image.

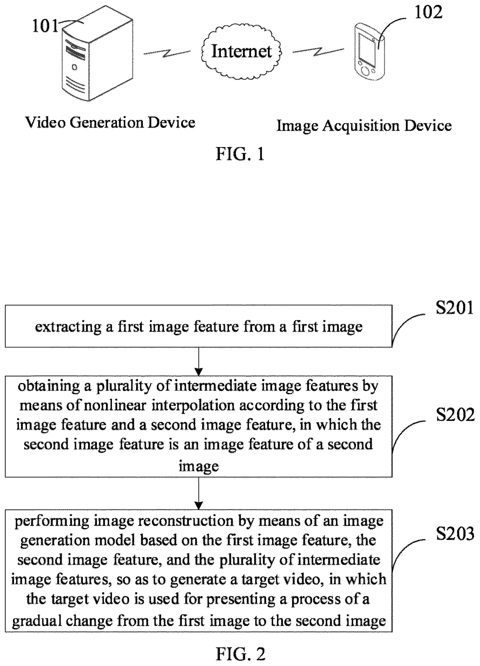

Referring to FIG. 1, FIG. 1 is a schematic diagram of an application scenario to which embodiments of the present disclosure are applicable.

As shown in FIG. 1, in this application scenario, a device involved includes a video generation device 101. The video generation device 101 may be a terminal or a server. FIG. 1 is an example of the video generation device 101 being a server. Two images may be processed on the video generation device 101 to generate a video that is used for presenting a gradual change effect between the two images.

In one embodiment, the device involved in the application scenario further includes an image acquisition device 102. The image acquisition device 102 may also be a terminal or a server. For example, the terminal acquires an image inputted by a user, or the terminal acquires an image in the current scene via a camera. For another example, the server acquires an image from a network that is disclosed on the network and allowed to be used by the public. FIG. 1 is an example of the image acquisition device 102 being a terminal. The image acquisition device 102 sends the acquired image to the video generation device 101. The video generation device 101 generates a video that is used for presenting a gradual change from the acquired image to another image (from the image acquisition device 102 or from another device), or a video presenting a gradual change from the other image to the acquired image.

The video generation device 101 and the image acquisition device 102 may be the same or different devices.

The video generation device 101 and the image acquisition device 102 may be the same devices, for example, a user uses a cellphone to take a selfie, obtaining a self-portrait image, and selects another image on the cellphone; and the cellphone generates a video based on the user's self-portrait image and the image selected by the user. The content of the video shows a process of a gradual change from the user's self-portrait image to the image selected by the user.

The video generation device 101 and the image acquisition device 102 may be different devices, for example, a user uses a cellphone to take a selfie, obtaining a self-portrait image, and selects another image on the cellphone; and the cellphone sends the self-portrait image and the image selected by the user to a server, and the server generates a video and returns the video to the cellphone. The content of the video shows a process of a gradual change from the user's self-portrait image to the image selected by the user.

The terminal may be a personal digital assistant (PDA) device, a handheld device (e.g., a smartphone, and a tablet computer), a computing device (e.g., a personal computer (PC)), a vehicle-mounted device, a wearable device (e.g., a smartwatch and a smart bracelet), a smart home device (e.g., a smart display device), etc. The server may be a distributed server, a centralized server, a cloud server, etc.

The following provides a plurality of embodiments of the present disclosure. The embodiments of the present disclosure may be executed by an electronic device, and the electronic device may be a terminal or a server.

Referring to FIG. 2, FIG. 2 is a schematic flowchart I of a video generation method according to an embodiment of the present disclosure. As shown in FIG. 2, the video generation method includes:

S201: extracting a first image feature from a first image.

The first image may be an image inputted by a user, an image from another device, or an image captured by a current execution device. For example, when the current execution device is a terminal, the terminal may obtain a first image inputted by the user, or obtain a first image captured by a camera on the terminal. For example, when the current execution device is a server, the server may receive the first image that is inputted by the user and sent from the terminal.

The first image feature is an image feature of the first image.

In the present embodiment, an encoder is adopted to encode the first image to obtain the first image feature, here, the first image feature specifically refers to an image feature obtained by encoding the first image.

S202: obtaining a plurality of intermediate image features by means of nonlinear interpolation according to the first image feature and a second image feature, in which the second image feature is an image feature of a second image.

The second image is an image different from the first image.

The second image feature specifically refers to an image feature obtained by encoding the second image.

In an example, a plurality of images, and image features obtained by encoding the plurality of images may be pre-stored. The second image feature is obtained from the stored image features of the plurality of images. In one way, a second image may be specified by the user among the pre-stored plurality of images, and an image feature of the second image, i.e., the second image feature, may be obtained from the image features of the plurality of images. In another way, the second image feature may be obtained among the image features of the plurality of images in a preset order (e.g., an order in which the images are stored) or at random.

For example, in response to an operation in which the user inputs the first image, a plurality of images for the user to select are displayed on the terminal; the user selects a second image among the plurality of images and inputs a request for generating a video that gradually changes from the first image to the second image on the terminal; and the terminal, in response to the request, obtains an image feature of the second image, i.e., the second image feature, among the image features of the plurality of images that have been pre-stored.

In another example, a second image inputted by the user, sent by another device, or captured by the current execution device may be obtained, and then is encoded to obtain the second image feature.

In the present embodiment, after the second image feature is obtained, the first image feature and the second image feature are taken as two known quantities in a nonlinear interpolation process, and a preset nonlinear interpolation method is adopted to perform nonlinear interpolation to obtain an interpolation function, i.e., to obtain an interpolation curve. On the interpolation curve, sampling is performed between a point corresponding to the first image feature and a point corresponding to the second image feature to obtain a plurality of intermediate image features. The intermediate image features are used for generating intermediate frames of the video.

In one embodiment, sampling at equal intervals on the interpolation curve makes the degree of change between neighboring intermediate image features obtained by interpolation similar, thus improving the quality of the video subsequently generated.

S203: performing image reconstruction by means of an image generation model based on the first image feature, the second image feature, and the plurality of intermediate image features, so as to obtain a target video, in which the target video is used for presenting a process of a gradual change from the first image to the second image.

The image generation model may be a neural network for image generation or image reconstruction, with its input data being a coded image feature and its output data being a reconstructed image. A trained image generation model disclosed on the network may be used, or the neural network may be trained by using training data (including a plurality of training images) to obtain the image generation model, and there is no limitation on the training process of the model.

In the present embodiment, after the plurality of intermediate image features are obtained, the first image feature, the second image feature, and the plurality of intermediate image features may be input into the image generation model to obtain a reconstructed image corresponding to the first image feature, a reconstructed image corresponding to the second image feature, and a reconstructed image corresponding to the respective intermediate image features, respectively. The plurality of reconstructed images may be sorted and combined in accordance with a distribution order of the first image feature, the second image feature, and the intermediate image features on the interpolation curve, to obtain the target video. In the target video, the first frame of image is the reconstructed image corresponding to the first image feature, the last frame of image is the reconstructed image corresponding to the second image feature, and the intermediate frames are reconstructed images corresponding to the intermediate image features.

In embodiments of the present disclosure, a plurality of intermediate image features are obtained by performing nonlinear interpolation based on a first image feature obtained by encoding a first image and a second image feature obtained by encoding a second image; and image reconstruction is performed by means of an image generation model based on the first image feature, the second image feature and the plurality of intermediate image features, and images reconstructed based on the image generation model are output.

Therefore, by way of performing nonlinear interpolation on the image features obtained by encoding two images, the reality of the intermediate image features obtained by interpolation and the similarity between the intermediate image features and the image features of the two original images are improved, thereby improving the reality and aesthetic of the intermediate frames of the video, improving the similarity between the intermediate frames and the first frame of image as well as the last frame of image, and improving the video quality.

With respect to the image generation model, the following describes some optional embodiments.

In some embodiments, the image generation model is a Generative Adversarial Network (GAN), and accordingly, by utilizing the advantages of the GAN in terms of image generation, the image reconstruction quality of the image generation model and the quality of image frames of the target video are improved.

In some embodiments, the image generation model is a Style-Based Architecture for GANs (StyleGAN) model or a StyleGAN2 model. Accordingly, by utilizing the advantages of the StyleGAN model or the StyleGAN2 model in terms of image generation, the image reconstruction quality of the image generation model and the quality of the image frames of the target video are improved.

With respect to the nonlinear interpolation process, in some embodiments, a feature space of the image generation model, a neural network may be used to assist the nonlinear interpolation. Subsequently, this auxiliary process is described through embodiments.

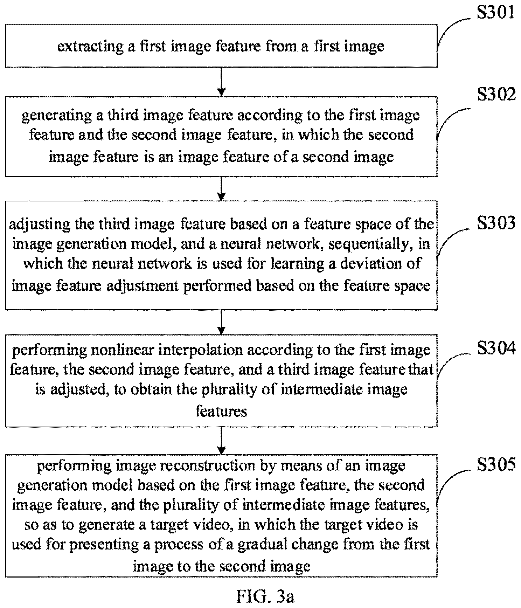

Referring to FIG. 3a, FIG. 3a is a schematic flowchart II of a video generation method according to an embodiment of the present disclosure. As shown in FIG. 3a, the video generation method includes:
S301: extracting a first image feature from a first image.

The implementation principle and technical effects of the step S301 may be referred to the above-mentioned embodiments and will not be repeated.

S302: generating a third image feature according to the first image feature and the second image feature, in which the second image feature is an image feature of a second image.

The process of obtaining the second image feature may be referred to the above-mentioned embodiments and will not be repeated.

In an example, an average value of the first image feature and the second image feature is determined, and the average value is the third image feature. Specifically, feature values at corresponding positions of the first image feature and the second image feature may be added and averaged to obtain the average value of the first image feature and the second image feature.

In another example, the first image feature and the second image feature are weighted and summed to obtain a third image feature. Weights corresponding to the first image feature and the second image feature, respectively, may be set in advance.

S303: adjusting the third image feature based on a feature space of the image generation model, and a neural network, sequentially, in which the neural network is used for learning a deviation of image feature adjustment performed based on the feature space.

The feature space of the image generation model may be understood as an input space of the image generation model, and feature samples in this input space conform to a certain probability distribution.

In one embodiment, when the image generation model is the generative adversarial network, the feature space of the image generation model is a latent space corresponding to the image generation model, and the image features obtained by encoding the first image and the second image by means of the encoder are latent codes, that is, the first image feature may be referred to as a first latent code, and the second image feature may be referred to as a second latent code.

In the present embodiment, after the third image feature is obtained, the third image feature may first be adjusted based on the feature samples in the feature space of the image generation model, making the third image feature closer to the feature samples in the feature space, thus improving the image quality of the reconstructed images obtained by image reconstruction based on the third image feature, i.e., improving the image quality of the intermediate frames.

In the present embodiment, considering that there may be a deviation in the adjustment for the third image feature based on the feature space, resulting in reduction of the similarity between the third image feature and the first image feature as well as the second image feature, therefore, in order to solve the problem, after the third image feature is adjusted based on the feature space, the third image feature is readjusted by means of a neural network model, thereby improving the similarity between the third image feature and the first image feature as well as the second image feature.

The neural network needs to be trained so that the neural network is able to learn the deviation of the image feature adjustment based on the feature space. The specific training process is referred to the subsequent embodiments.

In one embodiment, the neural network is a fully-connected neural network. Thus, in the case where the neural network has a single learning task and its input data and the output data are both image features, the accuracy in adjusting the third image feature is improved by the fully-connected neural network with a larger number of network parameters.

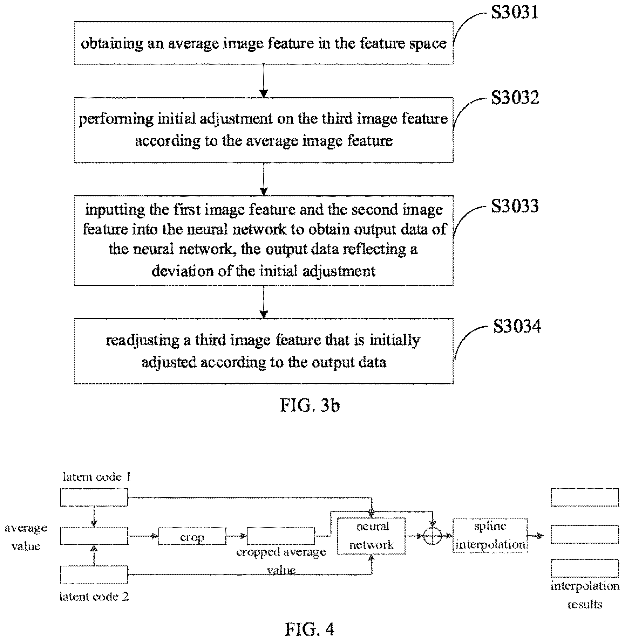

In a possible implementation, referring to FIG. 3b, FIG. 3b is a schematic flowchart of sequentially adjusting a third image feature based on a feature space of an image generation model and a neural network (i.e., S303) according to an embodiment of the present disclosure. As shown in FIG. 3b, the process (i.e., a possible implementation of the step S303) of sequentially adjusting the third image feature based on the feature space of the image generation model and the neural network includes:

S3031: obtaining an average image feature in the feature space; S3032: performing initial adjustment on the third image feature according to the average image feature; S3033: inputting the first image feature and the second image feature into the neural network to obtain output data of the neural network, the output data reflecting a deviation of the initial adjustment; and S3034: readjusting a third image feature that is initially adjusted according to the output data.

The output data of the neural network reflects a feature deviation resulting from an initial adjustment on the third image feature based on the average image feature in the feature space.

In the present embodiment, the average image feature in the feature space may be determined based on the probability distribution that the feature space conforms to. The probability that the feature space conforms to is, for example, a Gaussian distribution. After the average image feature is determined, the third image feature is subjected to the initial adjustment by utilizing the average image feature, making the third image feature close to the average image feature and improving the quality of the third image feature. The first image feature and the second image feature are then input into the neural network to obtain output data of the neural network. The output data of the neural network is also an image feature. Based on the output data of the neural network, the third image feature that is initially adjusted is readjusted, making the third image feature close to the first image feature and the second image feature, and improving the similarity between the third image feature and the first image feature as well as the second image feature.

In one embodiment, the step of performing initial adjustment on the third image feature according to the average image feature includes: determining a mean value of the third image feature and the average image feature, and determining the third image that is initially adjusted to be the mean value. Thus, feature cropping (i.e., the initial adjustment) of the third image feature is realized by way of solving for the mean value of the third image feature and the average image feature.

In one embodiment, the step of readjusting the third image feature that is initially adjusted according to the output data includes: adding the output data to the third image feature that is initially adjusted to obtain the third image feature that is readjusted. Thus, the similarity between the third image feature and the first image feature as well as the second image feature is improved by way of adding the feature deviation obtained in the initial adjustment process and learned by the neural network to the third image feature that is initially adjusted.

S304: performing nonlinear interpolation according to the first image feature, the second image feature, and a third image feature that is adjusted, to obtain the plurality of intermediate image features.

In the present embodiment, after the first image feature, the second image feature, and the finally adjusted third image feature are obtained, the first image feature, the second image feature, and the third image feature are taken as three known quantities, an interpolation curve is obtained by means of nonlinear interpolation, and sampling is performed on the interpolation curve to obtain the plurality of intermediate image features. Thus, in addition to the first image feature and the second image feature, the third image feature, having a high quality and a high similarity to the first image feature and the second image feature, is utilized in the nonlinear interpolation process, which effectively improves the accuracy of the nonlinear interpolation and improves the quality of the intermediate image features.

In one possible implementation, the nonlinear interpolation method adopts cubic spline interpolation. Herein, the step S304 includes: obtaining an interpolating curve by means of cubic spline interpolation according to the first image feature, the second image feature and the third image feature; and sampling on the interpolating curve to obtain the plurality of intermediate image features. Thus, the accuracy of the nonlinear interpolation and the quality of the intermediate image features are improved by means of the cubic spline interpolation.

Specifically, the third image feature may be input into the cubic spline interpolation together with the first image feature and the second image feature to obtain an interpolation function, i.e., to obtain an interpolation curve. Further, sampling is performed on the interpolation curve to obtain the plurality of intermediate image features.

S305: performing image reconstruction by means of an image generation model based on the first image feature, the second image feature, and the plurality of intermediate image features, so as to obtain a target video, in which the target video is used for presenting a process of a gradual change from the first image to the second image.

The implementation principle and technical effects of the step S305 may be referred to the above-mentioned embodiments and will not be repeated.

In embodiments of the present disclosure, based on the first image feature obtained by encoding the first image and the second image feature obtained by encoding the second image, a plurality of intermediate image features are obtained by using nonlinear interpolation based on a feature space and a neural network, thus effectively improving the accuracy of the nonlinear interpolation, and accordingly improving the quality of the intermediate image features, improving the image quality of the intermediate frames of the video, and improving the video quality.

Illustratively, referring to FIG. 4, FIG. 4 is an example framework diagram of nonlinear interpolation based on a feature space and a neural network according to an embodiment of the present disclosure. As shown in FIG. 4, an average value (equivalent to a third image feature here) of a latent code 1 (equivalent to a first image feature here) and a latent code 2 (equivalent to a second image feature here) is determined first, the average value is cropped based on the feature space to obtain a cropped average value (equivalent to the third image feature that is initially adjusted here); then, the latent code 1 and the latent code 2 are input into the neural network to obtain a feature deviation output by the neural network; and then, the feature deviation is added to the cropped average value (equivalent to obtaining the third image feature that is readjusted). In this way, finally, the latent code 1, the latent code 2 and the average value are used for spline interpolation to obtain a plurality of interpolation results (i.e., a plurality of intermediate image features).

It should be noted that the above embodiments provide a solution for adjusting the image features in conjunction with the feature space and the neural network, and in a practical application, the image features may also be adjusted based on the feature space alone, that is, the feature deviation resulting from the adjustment of the feature space is ignored.

In some embodiments, in order to improve the nonlinear interpolation effect, the neural network needs to be trained in advance, so that the neural network is able to learn the deviation of the image feature adjustment based on the feature space of the image generation model. The following provides embodiments of training the neural network.

It should be noted that the training process of the neural network and the video generation process in the above-mentioned embodiments may be performed on the same device or on different devices.

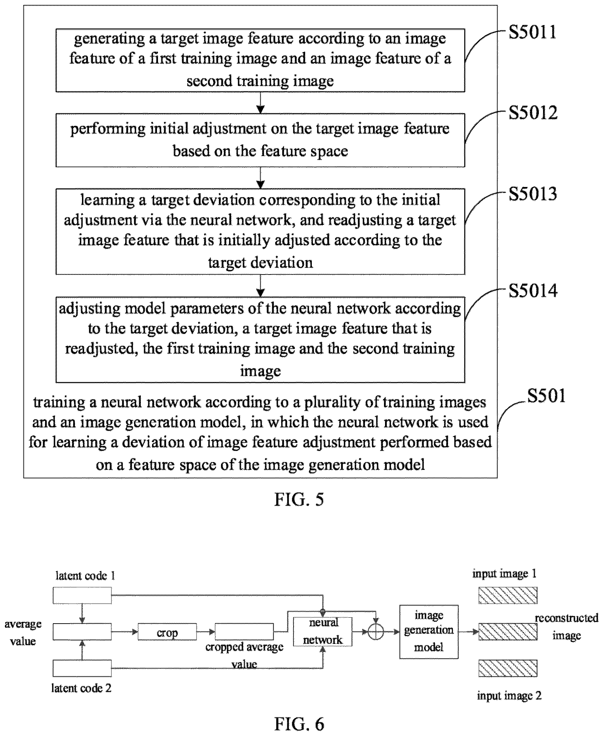

Referring to FIG. 5, FIG. 5 is a schematic flowchart of a model determination method according to an embodiment of the present disclosure. As shown in FIG. 5, the model determination method includes:

S501: training a neural network according to a plurality of training images and an image generation model, in which the neural network is used for learning a deviation of image feature adjustment performed based on a feature space of the image generation model.

In one training process of the neural network, the step S501 includes the following steps.

S5011: generating a target image feature according to an image feature of a first training image and an image feature of a second training image.

In the present embodiment, two training images may be obtained from a plurality of training images during each training process, and the two training images are referred to as a first training image and a second training image, respectively, for ease of differentiation. The two training images may be encoded by the encoder to obtain the image feature of the first training image and the image feature of the second training image. The image feature of the first training image and the image feature of the second training image are subjected to feature fusion processing to obtain the target image feature.

In an example, the operation of performing the feature fusion processing on the image feature of the first training image and the image feature of the second training image to obtain the target image feature includes: determining an average value of the image feature of the first training image and the image feature of the second training image, in which the average value is the target image feature. Specifically, feature values at corresponding positions of the image feature of the first training image and the image feature of the second training image may be added and averaged to obtain the average value.

In another example, the image feature of the first training image and the image feature of the second training image are weighted and summed to obtain the target image feature. Weights corresponding to the image feature of the first training image and the image feature of the second training image, respectively, may be set in advance.

S5012: performing initial adjustment on the target image feature based on the feature space.

In the present embodiment, the average image feature in the feature space may be determined based on a probability distribution that the feature space conforms to. The target image feature is subjected to initial adjustment by using the average image feature, making the target image feature close to the average image feature, and improving the quality of the target image feature.

In one embodiment, the step of performing initial adjustment on the target image feature according to the average image feature includes: determining a mean value of the target image feature and the average image feature, and determining the target image feature that is initially adjusted to be the mean value. Thus, feature cropping (i.e., the initial adjustment) of the target image feature is realized by way of solving for the mean value of the target image feature and the average image feature.

S5013: learning a target deviation corresponding to the initial adjustment via the neural network, and readjusting a target image feature that is initially adjusted according to the target deviation.

In the present embodiment, the image feature of the first training image and the image feature of the second training image are input into the neural network to obtain output data of the neural network, i.e., the target deviation, corresponding to the initial adjustment, obtained by learning. Based on the target deviation, corresponding to the initial adjustment, obtained by learning of the neural network, the target image feature that is initially adjusted is readjusted, so that the target image feature is close to the image feature of the first training image and the image feature of the second training image, that is, the similarity between the target image feature and the image feature of the first training image as well as the image feature of the second training image is improved.

In one embodiment, the step of readjusting the target image feature that is initially adjusted according to the target deviation includes: adding the target deviation to the target image feature that is initially adjusted to obtain the target image feature that is readjusted. Thus, the similarity between the target image feature and the image feature of the first training image as well as the image feature of the second image is improved by way of adding the feature deviation obtained in the initial adjustment process and learned by the neural network to the target image feature that is initially adjusted.

S5014: adjusting model parameters of the neural network according to the target deviation, a target image feature that is readjusted, the first training image and the second training image.

In the present embodiment, a training error of the neural network may be determined based on the target deviation, the target image feature that is readjusted, the first training image and the second training image, and the model parameters of the neural network are adjusted based on the training error. For example, the training error is determined based on a difference between the target image feature that is readjusted and the image feature of the first training image, and/or a difference between the target image feature that is readjusted and the image feature of the second training image.

In an example, the neural network is trained based on a regularized constraint and a similarity constraint, the regularized constraint is used for minimizing a difference between an image feature, which is adjusted based on the neural network, and an image feature, which is adjusted based on the feature space (i.e., the target image feature that is initially adjusted), and the similarity constraint is used for minimizing a difference between an image feature, which is adjusted based on the neural network (i.e., the target image feature that is readjusted), and the image feature of the first training image as well as the image feature of the second training image.

Herein, the step S5014 includes: determining a target optimization function of the neural network by means of a regularized constraint and a similarity constraint; and adjusting the model parameters of the neural network based on the target optimization function, the target deviation, the target image feature that is readjusted, the first training image and the second training image.

Specifically, the target optimization function of the neural network may be determined in advance according to the regularized constraint and the similarity constraint. During a training process of the neural network, a function value of the target optimization function, i.e., the training error of the neural network, is determined based on the target deviation, the first training image and the second training image. The model parameters of the neural network are optimized based on the training error. The optimization algorithm is, for example, a gradient descent algorithm.

Specifically, the image features mentioned in the above-mentioned embodiments are all coded image features. In order to improve the accuracy of model training, after the target image feature that is readjusted is obtained, the target image feature may be input into the image generation model to obtain an intermediate reconstructed image (i.e., a reconstructed image corresponding to the target image feature); and then, the first training image, the second training image and the intermediate reconstructed image may be subjected feature extraction via a feature extraction network, to obtain the image feature of the first training image, the image feature of the second training image, and the image feature of the intermediate reconstructed image, respectively. For example, when the first training image, the second training image, and the intermediate reconstruction image are all facial images, these images may be subjected to feature extraction by using a facial feature extraction network. Next, a difference between the image feature of the intermediate reconstructed image and the image feature of the first training image (the features extracted by the feature extraction network), and a difference between the image feature of the intermediate reconstructed image and the image feature of the second training image (the features extracted by the feature extraction network) are determined, and the training error is determined according to the two differences and the output data of the neural network.

In an example, the target optimization function of the neural network may be expressed as:

$$\text{minL} = \left\| \Phi\big(G(f(w_1, w_2) + w_3)\big) - \Phi(x_1) \right\|^2 + \left\| \Phi\big(G(f(w_1, w_2) + w_3)\big) - \Phi(x_2) \right\|^2 + \lambda \|f(w_1, w_2)\|$$

in which $x_1$ and $x_2$ represent the first training image and the second training image, respectively, $w_1$ represents the image feature obtained by encoding the first training image, $w_2$ represents the image feature obtained by encoding the second training image, $w_3$ represents the target image feature, $f(\square)$ represents the neural network, $G(\square)$ represents the image generation model, $\Phi(\square)$ represents the feature extraction network, and $\lambda$ is a preset parameter.

$$\left\| \Phi\big(G(f(w_1, w_2) + w_3)\big) - \Phi(x_1) \right\|^2 + \left\| \Phi\big(G(f(w_1, w_2) + w_3)\big) - \Phi(x_2) \right\|^2$$

is the similarity constraint and $\lambda\|f(w_1, w_2)\|$ is the regularized constraint.

In this way, the above steps are repeated and the neural network is adjusted several times.

Illustratively, referring to FIG. 6, FIG. 6 is a schematic diagram of a training framework of a neural network according to an embodiment of the present disclosure. As shown in FIG. 6, a training process includes: first, determining an average value of a latent code 1 (an image feature obtained by encoding an input image 1) and a latent code 2 (an image feature obtained by encoding an input image 2); based on the feature space of the image generation model, performing feature cropping (i.e., performing the initial adjustment) on the average value to obtain a cropped average value; inputting the latent code 1 and latent code 2 into the neural network, and according to a feature deviation output by the neural network, determining the part of the training error subjected to the regularized constraint ; then adding the feature deviation output by the neural network to the cropped average value, and then inputting this average value into the image generation model to obtain a reconstructed image; and finally, determining a feature difference between the reconstructed image and the input image 1, and a feature difference between the reconstructed image and the input image 2 via a feature network, and based on the two feature differences, determining the part of the training error subjected to the similarity constraint. In this way, the model parameters of the neural network are adjusted based on the part of the training error subjected to the regularized constraint and the part of the training error subjected to the similarity constraint.

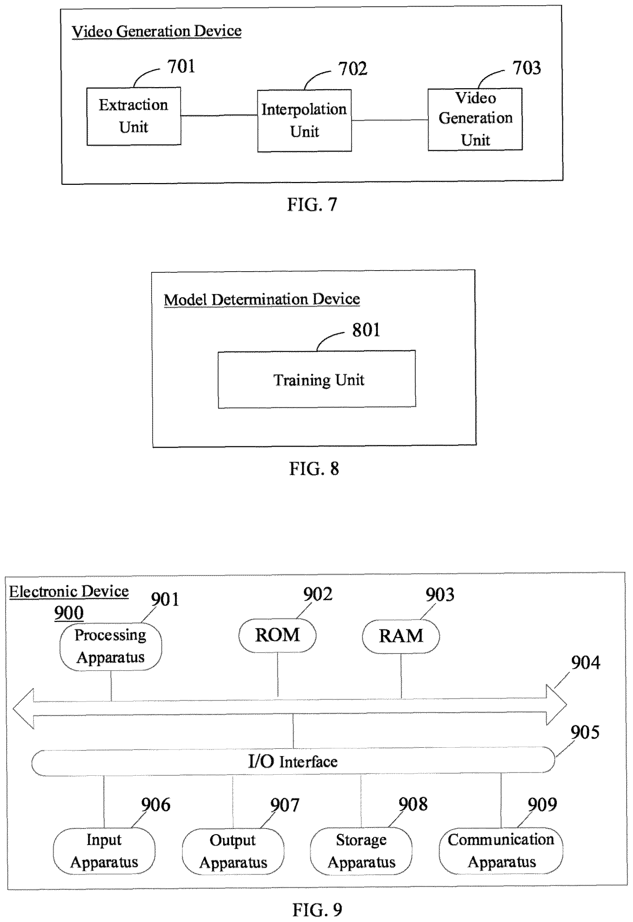

Corresponding to the video generation method of the above-mentioned embodiments, FIG. 7 is a block diagram of a structure of a video generation device according to an embodiment of the present disclosure. For ease of illustration, only parts related to the embodiments of the present disclosure are shown. With reference to FIG. 7, a video generation device includes an extraction unit 701 and an interpolation unit 702.

The extraction unit 701 is configured to extract a first image feature from a first image.

The interpolation unit 702 is configured to obtain a plurality of intermediate image features by means of nonlinear interpolation according to the first image feature and a second image feature, in which the second image feature is an image feature of a second image.

A video generation unit 703 is configured to perform image reconstruction by means of an image generation model based on the first image feature, the second image feature, and the plurality of intermediate image features, so as to generate a target video, in which the target video is used for presenting a process of a gradual change from the first image to the second image.

In some embodiments, the interpolation unit 702 is further configured to generate a third image feature according to the first image feature and the second image feature; adjust the third image feature based on a feature space of the image generation model, and a neural network, sequentially, in which the neural network is used for learning a deviation of image feature adjustment performed based on the feature space; and perform nonlinear interpolation according to the first image feature, the second image feature, and a third image feature that is adjusted, to obtain the plurality of intermediate image features.

In some embodiments, the interpolation unit 702 is further configured to obtain an average image feature in the feature space; perform initial adjustment on the third image feature according to the average image feature; input the first image feature and the second image feature into the neural network to obtain output data of the neural network, the output data reflecting a deviation of the initial adjustment; and readjust a third image feature that is initially adjusted according to the output data.

In some embodiments, the interpolation unit 702 is further configured to determine a mean value of the third image feature and the average image feature; and determine the third image feature that is initially adjusted to be the mean value.

In some embodiments, the neural network is trained based on a regularized constraint and a similarity constraint, the regularized constraint is used for minimizing a difference between an image feature, which is adjusted based on the neural network, and an image feature, which is adjusted based on the feature space, and the similarity constraint is used for minimizing a difference between an image feature, which is adjusted based on the neural network, and an image feature of a first training image feature as well as an image feature of a second training image.

In some embodiments, the interpolation unit 702 is further configured to obtain an interpolating curve by means of cubic spline interpolation according to the first image feature, the second image feature and the third image feature; and sample on the interpolating curve to obtain the plurality of intermediate image features.

In some embodiments, the image generation model is a StyleGAN model or a StyleGAN2 model.

The video generation device provided in the present embodiments may be used for performing the technical solutions of the above-mentioned embodiments related to the video generation method, which have similar implementation principle and similar technical effects. Details are not described again herein in the present embodiment.

Corresponding to the model determination method of the above-mentioned embodiments, FIG. 8 is a block diagram of a structure of a model determination device according to an embodiment of the present disclosure. For ease of illustration, only parts related to the embodiments of the present disclosure are shown. With reference to FIG. 8, a model determination device includes a training unit 801.

The training unit 801 is configured to train a neural network according to a plurality of training images and an image generation model, in which the neural network is used for learning a deviation of image feature adjustment based on a feature space of the image generation model.

A training process of the neural network includes: generating a target image feature according to an image feature of a first training image and an image feature of a second training image; performing initial adjustment on the target image feature based on the feature space; learning a target deviation corresponding to the initial adjustment via the neural network, and readjusting a target image feature that is initially adjusted according to the target deviation; and adjusting model parameters of the neural network according to the target deviation, a target image feature that is readjusted, the first training image and the second training image.

In some embodiments, the training unit 801 is further configured to determine a target optimization function of the neural network by means of a regularized constraint and a similarity constraint; and adjust the model parameters of the neural network based on the target optimization function, the target deviation, the target image feature that is readjusted, the first training image and the second training image. The regularized constraint is used for minimizing a difference between the target image feature that is readjusted and the target image feature that is initially adjusted, and the similarity constraint is used for minimizing a difference between the target image feature that is readjusted and the image feature of the first training image, and the image feature of the second training image.

The model determination device provided by the present embodiment may be used for performing the technical solutions of the above-mentioned embodiments related to the model determination method, which have similar implementation principle and similar technical effects. Details are not described again herein in the present embodiment.

Referring to FIG. 9, FIG. 9 illustrates a schematic structural diagram of an electronic device 900 suitable for implementing some embodiments of the present disclosure. The electronic device 900 may be a terminal device or a server. The terminal device may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal) or the like, and fixed terminals such as a digital TV, a desktop computer, or the like. The electronic device illustrated in FIG. 9 is merely an example, and should not pose any limitation to the functions and the range of use of the embodiments of the present disclosure.

As illustrated in FIG. 9, the electronic device 900 may include a processing apparatus 901 (e.g., a central processing unit, a graphics processing unit, etc.), which can perform various suitable actions and processing according to a program stored in a read only memory (ROM) 902 or a program loaded from a storage apparatus 908 into a random access memory (RAM) 903. The RAM 903 further stores various programs and data required for operations of the electronic device 900. The processing apparatus 901, the ROM 902, and the RAM 903 are interconnected by means of a bus 904. An input/output (I/O) interface 905 is also connected to the bus 904.

Usually, the following apparatus may be connected to the I/O interface 905: an input apparatus 906 including, for example, a touch screen, a touch pad, a keyboard, a mouse, a camera, a microphone, an accelerometer, a gyroscope, or the like; an output apparatus 907 including, for example, a liquid crystal display (LCD), a loudspeaker, a vibrator, or the like; a storage apparatus 908 including, for example, a magnetic tape, a hard disk, or the like; and a communication apparatus 909. The communication apparatus 909 may allow the electronic device 900 to be in wireless or wired communication with other devices to exchange data. While FIG. 9 illustrates the electronic device 900 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a computer-readable medium. The computer program includes program codes for performing the methods shown in the flowcharts. In such embodiments, the computer program may be downloaded online through the communication apparatus 909 and installed, or may be installed from the storage apparatus 908, or may be installed from the ROM 902. When the computer program is executed by the processing apparatus 901, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to implement the method in the above embodiment.

The computer program codes for performing the operations of the present disclosure may be written in one or more programming languages or a combination thereof. The above-mentioned programming languages include object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. Among them, the name of the unit does not constitute a limitation of the unit itself under certain circumstances, for example, an acquisition unit may also be described as "the unit that acquires the target audio".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

In a first aspect, according to one or more embodiments of the present disclosure, a video generation method is provided, including: extracting a first image feature from a first image; obtaining a plurality of intermediate image features by means of nonlinear interpolation according to the first image feature and a second image feature, in which the second image feature is an image feature of a second image; and performing image reconstruction by means of an image generation model based on the first image feature, the second image feature, and the plurality of intermediate image features, so as to generate a target video, in which the target video is used for presenting a process of a gradual change from the first image to the second image.

According to one or more embodiments of the present disclosure, the obtaining the plurality of intermediate image features by means of nonlinear interpolation according to the first image feature and the second image feature includes: generating a third image feature according to the first image feature and the second image feature; adjusting the third image feature based on a feature space of the image generation model, and a neural network, sequentially, in which the neural network is used for learning a deviation of image feature adjustment performed based on the feature space; and performing nonlinear interpolation according to the first image feature, the second image feature, and a third image feature that is adjusted, to obtain the plurality of intermediate image features.

According to one or more embodiments of the present disclosure, the adjusting the third image feature based on the feature space of the image generation model, and the neural network, sequentially, in which the neural network is used for learning the deviation of image feature adjustment performed based on the feature space, includes: obtaining an average image feature in the feature space; performing initial adjustment on the third image feature according to the average image feature; inputting the first image feature and the second image feature into the neural network to obtain output data of the neural network, the output data reflecting a deviation of the initial adjustment; and readjusting a third image feature that is initially adjusted according to the output data.

According to one or more embodiments of the present disclosure, the performing initial adjustment on the third image feature according to the average image feature includes: determining a mean value of the third image feature and the average image feature; and determining the third image feature that is initially adjusted to be the mean value.

According to one or more embodiments of the present disclosure, the neural network is trained based on a regularized constraint and a similarity constraint, the regularized constraint is used for minimizing a difference between an image feature, which is adjusted based on the neural network, and an image feature, which is adjusted based on the feature space, and the similarity constraint is used for minimizing a difference between an image feature, which is adjusted based on the neural network, and an image feature of a first training image as well as an image feature of a second training image.

According to one or more embodiments of the present disclosure, the performing nonlinear interpolation based on the first image feature, the second image feature, and the third image feature that is adjusted, to obtain the plurality of intermediate image features includes: obtaining an interpolating curve by means of cubic spline interpolation according to the first image feature, the second image feature and the third image feature; and sampling on the interpolating curve to obtain the plurality of intermediate image features.

According to one or more embodiments of the present disclosure, the image generation model is a StyleGAN model or a StyleGAN2 model.

In a second aspect, according to one or more embodiments of the present disclosure, a model determination method is provided, including: training a neural network according to a plurality of training images and an image generation model, in which the neural network is used for learning a deviation of image feature adjustment performed based on a feature space of the image generation model, in which a training process of the neural network includes: generating a target image feature according to an image feature of a first training image and an image feature of a second training image; performing initial adjustment on the target image feature based on the feature space; learning a target deviation corresponding to the initial adjustment via the neural network, and readjusting a target image feature that is initially adjusted according to the target deviation; and adjusting model parameters of the neural network according to the target deviation, a target image feature that is readjusted, the first training image and the second training image.

According to one or more embodiments of the present disclosure, the adjusting model parameters of the neural network according to the target deviation, the target image feature that is readjusted, the first training image and the second training image includes:

determining a target optimization function of the neural network by means of a regularized constraint and a similarity constraint; and

adjusting the model parameters of the neural network based on the target optimization function, the target deviation, the target image feature that is readjusted, the first training image and the second training image,

in which the regularized constraint is used for minimizing a difference between the target image feature that is readjusted and the target image feature that is initially adjusted, and the similarity constraint is used for minimizing a difference between the target image feature that is readjusted and the image feature of the first training image, and the image feature of the second training image.

In a third aspect, according to one or more embodiments of the present disclosure, a video generation device is provided, including: an extraction unit, configured to extract a first image feature from a first image; an interpolation unit, configured to obtain a plurality of intermediate image features by means of nonlinear interpolation according to the first image feature and a second image feature, in which the second image feature is an image feature of a second image; and a video generation unit, configured to perform image reconstruction by means of an image generation model based on the first image feature, the second image feature, and the plurality of intermediate image features, so as to generate a target video, in which the target video is used for presenting a process of a gradual change from the first image to the second image.

In a fourth aspect, according to one or more embodiments of the present disclosure, a model determination device is provided, including: a training unit, configured to train a neural network according to a plurality of training images and an image generation model, in which the neural network is used for learning a deviation of image feature adjustment performed based on a feature space of the image generation model, in which a training process of the neural network includes: generating a target image feature according to an image feature of a first training image and an image feature of a second training image; performing initial adjustment on the target image feature based on the feature space; learning a target deviation corresponding to the initial adjustment via the neural network, and readjusting a target image feature that is initially adjusted according to the target deviation; and adjusting model parameters of the neural network according to the target deviation, a target image feature that is readjusted, the first training image and the second training image.

In a fifth aspect, according to one or more embodiments of the present disclosure, an electronic device is provided, including: at least one processor and a memory, in which the memory stores a computer-executable instruction, and the at least one processor executes the computer-executable instruction stored in the memory such that the at least one processor performs the video generation method as described in the first aspect and various possible designs of the first aspect, or, such that the at least one processor performs the model determination method as described in the second aspect and various possible designs of the second aspect.

In a sixth aspect, according to one or more embodiments of the present disclosure, a computer-readable storage medium is provided, and the computer readable storage medium stores computer-executable instructions, in which a processor, and when the computer executable instructions are executed by a processor, the video generation method as described in the first aspect and various possible designs of the first aspect or the model determination method as described in the second aspect and various possible designs of the second aspect is implemented.

In a seventh aspect, according to one or more embodiments of the present disclosure, a computer program product is provided, and the computer program product includes computer executable instructions, and when the computer executable instructions are executed by a processor, the video generation method as described in the first aspect and various possible designs of the first aspect or the model determination method as described in the second aspect and various possible designs of the second aspect is implemented.

In an eighth aspect, according to one or more embodiments of the present disclosure, a computer program is provided, and when the computer program is executed by a processor, the image generation method as described in the first aspect and various possible designs of the first aspect or the model determination method as described in the second aspect and various possible designs of the second aspect is implemented

The above descriptions are merely preferred embodiments of the present disclosure and illustrations of the technical principles employed. Those skilled in the art should understand that the scope of disclosure involved in the present disclosure is not limited to the technical solutions formed by the specific combination of the above-mentioned technical features, and should also cover, without departing from the above-mentioned disclosed concept, other technical solutions formed by any combination of the above-mentioned technical features or their equivalents, such as technical solutions which are formed by replacing the above-mentioned technical features with the technical features disclosed in the present disclosure (but not limited to) with similar functions.

Additionally, although operations are depicted in a particular order, it should not be understood that these operations are required to be performed in a specific order as illustrated or in a sequential order. Under certain circumstances, multitasking and parallel processing may be advantageous. Likewise, although the above discussion includes several specific implementation details, these should not be interpreted as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combinations.

Although the subject matter has been described in language specific to structural features and/or method logical actions, it should be understood that the subject matter defined in the appended claims is not necessarily limited to the specific features or actions described above. Rather, the specific features and actions described above are merely example forms of implementing the claims.

**Claims**

1. A video generation method, comprising:

   extracting a first image feature from a first image;
   obtaining a plurality of intermediate image features by means of nonlinear interpolation according to the first image feature and a second image feature, wherein the second image feature is an image feature of a second image; and
   performing image reconstruction by means of an image generation model based on the first image feature, the second image feature, and the plurality of intermediate image features, so as to generate a target video, wherein the target video is used for presenting a process of a gradual change from the first image to the second image.

2. The video generation method according to claim 1, wherein the obtaining the plurality of intermediate image features by means of nonlinear interpolation according to the first image feature and the second image feature comprises:

   generating a third image feature according to the first image feature and the second image feature;
   adjusting the third image feature based on a feature space of the image generation model, and a neural network, sequentially, wherein the neural network is used for learning a deviation of image feature adjustment performed based on the feature space; and
   performing nonlinear interpolation according to the first image feature, the second image feature, and a third image feature that is adjusted, to obtain the plurality of intermediate image features.

3. The video generation method according to claim 2, wherein, the adjusting the third image feature based on the feature space of the image generation model, and the neural network, sequentially, wherein the neural network is used for learning the deviation of image feature adjustment performed based on the feature space, comprises:

   obtaining an average image feature in the feature space;
   performing initial adjustment on the third image feature according to the average image feature;
   inputting the first image feature and the second image feature into the neural network to obtain output data of the neural network, the output data reflecting a deviation of the initial adjustment; and
   readjusting a third image feature that is initially adjusted according to the output data.

4. The video generation method according to claim 3, wherein the performing initial adjustment on the third image feature according to the average image feature comprises:

   determining a mean value of the third image feature and the average image feature; and
   determining the third image feature that is initially adjusted to be the mean value.

5. The video generation method according to any one of claims 2 to 4, wherein the neural network is trained based on a regularized constraint and a similarity constraint, the regularized constraint is used for minimizing a difference between an image feature, which is adjusted based on the neural network, and an image feature, which is adjusted based on the feature space, and the similarity constraint is used for minimizing a difference between an image feature, which is adjusted based on the neural network, and an image feature of a first training image as well as an image feature of a second training image.

6. The video generation method according to any one of claims 2 to 5, wherein the performing nonlinear interpolation according to the first image feature, the second image feature, and the third image feature that is adjusted, to obtain the plurality of intermediate image features comprises:

  obtaining an interpolating curve by means of cubic spline interpolation according to the first image feature, the second image feature and the third image feature; and
  sampling on the interpolating curve to obtain the plurality of intermediate image features.

7. The video generation method according to any one of claims 1 to 6, wherein the image generation model is a StyleGAN model or a StyleGAN2 model.

8. A model determination method, comprising:

  training a neural network according to a plurality of training images and an image generation model, wherein the neural network is used for learning a deviation of image feature adjustment performed based on a feature space of the image generation model,
  wherein a training process of the neural network comprises:

    generating a target image feature according to an image feature of a first training image and an image feature of a second training image;
    performing initial adjustment on the target image feature based on the feature space;
    learning a target deviation corresponding to the initial adjustment via the neural network, and readjusting a target image feature that is initially adjusted according to the target deviation; and
    adjusting model parameters of the neural network according to the target deviation, a target image feature that is readjusted, the first training image and the second training image.

9. The model determination method according to claim 8, wherein the adjusting model parameters of the neural network according to the target deviation, the target image feature that is readjusted, the first training image and the second training image comprises:

  determining a target optimization function of the neural network by means of a regularized constraint and a similarity constraint; and
  adjusting the model parameters of the neural network based on the target optimization function, the target deviation, the target image feature that is readjusted, the first training image and the second training image, wherein the regularized constraint is used for minimizing a difference between the target image feature that is readjusted and the target image feature that is initially adjusted, and the similarity constraint is used for minimizing a difference between the target image feature that is readjusted and the image feature of the first training image, and the image feature of the second training image.

10. A video generation device, comprising:

  an extraction unit, configured to extract a first image feature from a first image;
  an interpolation unit, configured to obtain a plurality of intermediate image features by means of nonlinear interpolation according to the first image feature and a second image feature, wherein the second image feature is an image feature of a second image; and
  a video generation unit, configured to perform image reconstruction by means of an image generation model based on the first image feature, the second image feature, and the plurality of intermediate image features, so as to generate a target video, wherein the target video is used for presenting a process of a gradual change from the first image to the second image.

11. A model determination device, comprising:

  a training unit, configured to train a neural network according to a plurality of training images and an image generation model, wherein the neural network is used for learning a deviation of image feature adjustment performed based on a feature space of the image generation model,
wherein a training process of the neural network comprises:

generating a target image feature according to an image feature of a first training image and an image feature of a second training image;
performing initial adjustment on the target image feature based on the feature space;
learning a target deviation corresponding to the initial adjustment via the neural network, and readjusting a target image feature that is initially adjusted according to the target deviation; and
adjusting model parameters of the neural network according to the target deviation, a target image feature that is readjusted, the first training image and the second training image.

12. An electronic device, comprising:

at least one processor and a memory,
wherein the memory stores a computer-executable instruction, and
the at least one processor executes the computer-executable instruction stored in the memory such that the at least one processor performs the video generation method according to any one of claims 1 to 7, or, such that the at least one processor performs the model determination method according to claim 8 or 9.

13. A computer-readable storage medium, wherein the computer readable storage medium stores computer-executable instructions, wherein a processor, and when the computer executable instructions are executed by a processor, the video generation method according to any one of claims 1 to 7 or the model determination method according to claim 8 or 9 is implemented.

14. A computer program product, wherein the computer program product comprises computer executable instructions, and when the computer executable instructions are executed by a processor, the video generation method according to any one of claims 1 to 7 or the model determination method according to claim 8 or 9 is implemented.

15. A computer program, wherein when the computer program is executed by a processor, the image generation method according to any one of claims 1 to 7 or the model determination method according to claim 8 or claim 9 is implemented.

Video Generation Device                Image Acquisition Device

FIG. 1

| extracting a first image feature from a first image | S201 |

obtaining a plurality of intermediate image features by means of nonlinear interpolation according to the first image feature and a second image feature, in which the second image feature is an image feature of a second image — S202

performing image reconstruction by means of an image generation model based on the first image feature, the second image feature, and the plurality of intermediate image features, so as to generate a target video, in which the target video is used for presenting a process of a gradual change from the first image to the second image — S203

FIG. 2

extracting a first image feature from a first image — S301

generating a third image feature according to the first image feature and the second image feature, in which the second image feature is an image feature of a second image — S302

adjusting the third image feature based on a feature space of the image generation model, and a neural network, sequentially, in which the neural network is used for learning a deviation of image feature adjustment performed based on the feature space — S303

performing nonlinear interpolation according to the first image feature, the second image feature, and a third image feature that is adjusted, to obtain the plurality of intermediate image features — S304

performing image reconstruction by means of an image generation model based on the first image feature, the second image feature, and the plurality of intermediate image features, so as to generate a target video, in which the target video is used for presenting a process of a gradual change from the first image to the second image — S305

FIG. 3a

obtaining an average image feature in the feature space — S3031

performing initial adjustment on the third image feature according to the average image feature — S3032

inputting the first image feature and the second image feature into the neural network to obtain output data of the neural network, the output data reflecting a deviation of the initial adjustment — S3033

readjusting a third image feature that is initially adjusted according to the output data — S3034

FIG. 3b

latent code 1

average value

crop

cropped average value

neural network

spline interpolation

latent code 2

interpolation results

FIG. 4

generating a target image feature according to an image feature of a first training image and an image feature of a second training image ⟋ S5011

performing initial adjustment on the target image feature based on the feature space ⟋ S5012

learning a target deviation corresponding to the initial adjustment via the neural network, and readjusting a target image feature that is initially adjusted according to the target deviation ⟋ S5013

adjusting model parameters of the neural network according to the target deviation, a target image feature that is readjusted, the first training image and the second training image ⟋ S5014

training a neural network according to a plurality of training images and an image generation model, in which the neural network is used for learning a deviation of image feature adjustment performed based on a feature space of the image generation model ⟋ S501

FIG. 5

latent code 1

average value

crop

cropped average value

neural network

image generation model

input image 1

reconstructed image

input image 2

latent code 2

FIG. 6

Video Generation Device

701

Extraction Unit

702

Interpolation Unit

703

Video Generation Unit

FIG. 7

Model Determination Device

801

Training Unit

FIG. 8

Electronic Device 900

901 Processing Apparatus

902 ROM

903 RAM

904

905

I/O Interface

906 Input Apparatus

907 Output Apparatus

908 Storage Apparatus

909 Communication Apparatus

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111609441